# EUROPEAN PATENT SPECIFICATION

(11) **EP 1 293 903 B1**
(45) Date of publication and mention of the grant of the patent: **27.02.2008**
(21) Application number: 02022681.7
(22) Date of filing: 08.12.1998
(51) Int. Cl.: G06F 11/267

(54) **Remote diagnostic system**
Ferndiagnoseeinrichtung
Dispositif de diagnostic à distance

(30) Priority: 08.12.1997 JP 33740197; 17.12.1997 JP 34814397; 19.12.1997 JP 35172597
(43) Date of publication of application: 19.03.2003
(62) Divisional of application: 98310057.9
(73) Proprietor: Ricoh Company, Ltd., Tokyo 143-8555 (JP)
(72) Inventor: Suzuki, Kobun, Kawasaki-shi, Kanagawa-ken (JP); Yamaguchi, Shin, Chiba-shi, Chiba-ken (JP)
(74) Representative: Leeming, John Gerard

(56) References cited:
- US-A- 3 787 670
- US-A- 4 837 764
- US-A- 4 870 566
- US-A- 5 202 726

## Description

This invention relates to remote diagnostic systems and methods for supervising a plurality of image-forming-apparatuses each located at a user side remote from a control center and connected with the control center via a public communication network, a data communication adapter, and a wired or a wireless interface, and in particular, relates to remote diagnosis systems and methods capable of avoiding any increase in numbers of computer operators at the control center.

A background remote diagnostic system generally supervises from a control center a plurality of image-forming apparatuses such as OA machines (Office Automation Machines) each located at a user side as a business office. In the background remote diagnostic system, data, for example, of a total amount of consumable items are collected from the image-forming apparatuses and are used, for example, to maintain the image-forming apparatuses. For maintenance, which may be a result of self-recognition of its operational condition, the background remote diagnosis system automatically dials the control center to inform it of a problem created in an image forming apparatus or the like. Further, a communication from the control center to each of the image-forming apparatuses is generally executed using the remote diagnosis system by accessing an image-forming apparatus to send data related to a repair or an adjustment of parts of the image-forming apparatuses.

A total copy count, data of which are stored in a copy counter employed in the image-forming apparatus, is generally confirmed directly calling on a user, or by making a telephone call thereto. With a remote diagnostic system it can be automatically collected to calculate, for example, a maintenance fee for a month based on the total copy count in accordance with a maintenance contract exchanged between the user and an image-forming apparatus supplier.

Further, in such a background remote diagnostic system, an order for consumable items such as toner, copy sheets, and so on, and an inquiry about a fatigue of an image, generation of unusual sound, an operation know-how, and so on are generally made by the user to the control center using a telephone line.

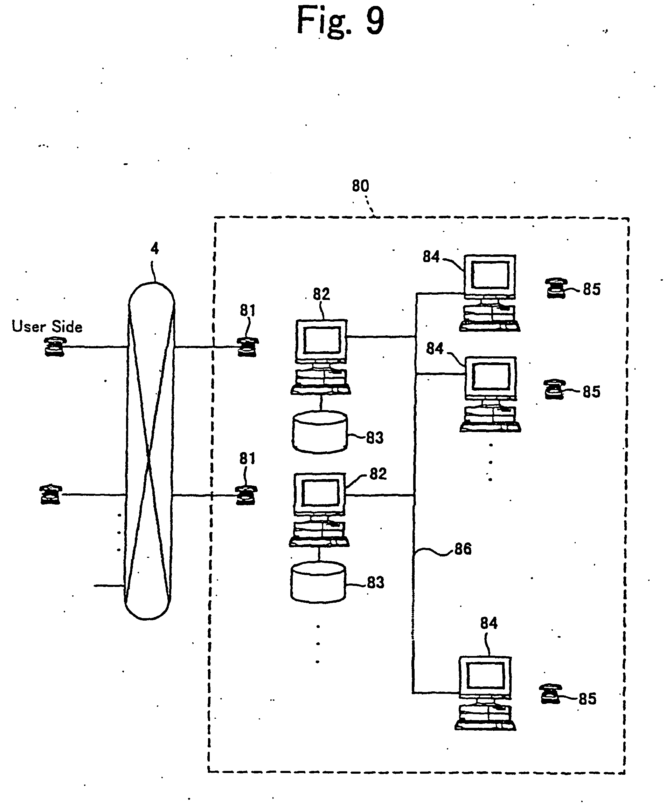

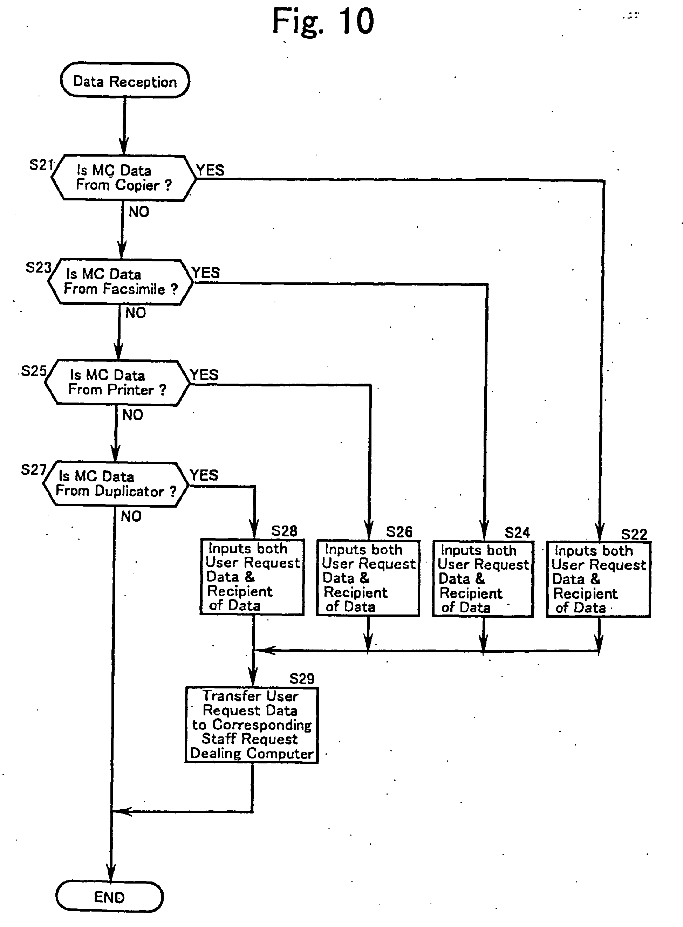

The background remote diagnostic system is explained in more detail referring to Figs 9 and 10. Fig. 9 illustrates a central-computer sub-system 80 that constitutes a part of a background central computer system using a block chart. The central-computer sub-system 80 includes a plurality of user request-receiving computers 82 each operated by an operator and having a hard disk 83 therein, and a plurality of operator telephones 81 each used by the operator.

The central-computer sub-system 80 further includes a plurality of request-dealing computers 84 each operated by a person corresponding to a kind of image-forming apparatus, a plurality of telephones 85 each used by a person, and a network 86 such as LAN (Local Area Network) that connects the user request-receiving computers 82 with the request-dealing computers 84.

The receipt of a user request and a request-dealing operation by the central-computer sub-system 80 are each illustrated in Fig. 10 using a flow chart. The central-computer sub-system 80 accepts user requests via telephones 81. The operator may hear a user's name, a model of the image-forming apparatus, contents of a request, a telephone number of a user, and so on. The operator then inputs such data as user request data into his or her user request-receiving computer through a keyboard or the like to store the user data in a request-receiving database (hereinafter referred to as DB) installed in the hard disk (hereinafter referred to as HDD) 83.

The operator determines which of the persons having a request-dealing computer in charge of dealing with a request from the relevant model of image-forming apparatus, and then communicates the data thereto so that the request is dealt with by the person. The operator then inputs the user request data and indicating a recipient of the user request data to store both the data in the request-receiving database of the HDD 83. For example, if the request relates to a copier, the operator inputs data indicating the copier and data indicating a request-dealing computer which may handle the request from the copier are into the request receiving database.

The user request-receiving computer 82 then sends the data through the network 86 to the prescribed request-dealing computer 84 determined by the operator. The prescribed request-dealing computer 84 displays the contents of the data on a display thereof so that the contents is confirmed by a person when the data is received from one of the user request-receiving computers 82. The person then deals with the request, for example, by having a service person call on the user to repair or to maintain the image-forming apparatus or by making a telephone call to give advice to the user.

However, in such a background remote diagnostic system, an operator is required to each of the user request-receiving computers 82. Further, since the operator of the request-receiving computer 82 has to determine which person is suitable to deal with a request and to send data of the request based on his or her determination thereof, a load on the operator and an operation time for the operator increases and thereby resulting in a slow response.

Further, the more request calls from users there are, are the greater the chance of operational mistakes. This is because, when the number of request calls increases, more request-receiving computers 82 are required, and accordingly more operators are also required. Further, if the number of kinds of image-forming apparatuses to be supervised increases, the request data distribution work of the operator may become more complex.

Further, the amount of work of the operators cannot be even and work may be concentrated on a limited number of operators. Further, it is an issue for a user that requests cannot be dealt in the priority order.

The background remote diagnostic system generally functions as described below. First, image-forming apparatuses automatically themselves make calls to send data related to problems occurring in the image-forming apparatus to a central-computer sub-system 80 through a wired or wireless interface, a communication adapter, and a public communication network. Second, a central-computer sub-system 80 displays the contents of the problem data on a display when received in the order of their arrival.

In such a background remote diagnostic system, since a problem such as a paper jam created in any of image-forming apparatuses is informed to a central computer and the contents thereof is displayed on the display of the central-computer sub-system, an operator working for the central-computer sub-system 80 may judge the status of the image-forming apparatus having the problem can be reset so that the image forming apparatus returns its initial state (hereinafter referred to as a RESET VALID status).

If the image-forming apparatus is in the RESET VALID status, the operator makes a telephone call to the user of the image-forming apparatus to ask the user to reset a status of the image-forming apparatus of the problem by turning its reset switch to return the same to the initial status and then report a result of the reset operation. The operator could instead have a service person call on the user to reset a status of the image-forming apparatus having the problem. However, the workload of both the operator and the service person increases corresponding to an increase in number of user.

Further, in a background diagnostic system, a plurality of data related to problems created in an image-forming apparatus are transmitted to the central-computer sub-system 80 and displayed on a display of the request-dealing computer in their order or receipt. Thus, the operator can only resolve the problems in the order of their receipt.

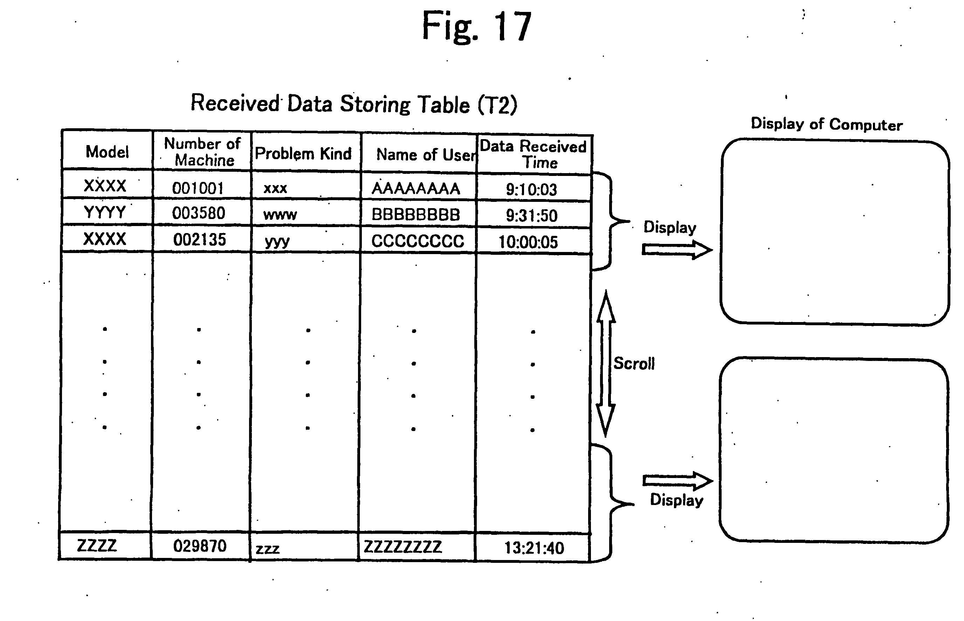

To display the data of problems, the background remote diagnosis system provides a tables (T1) that stores data related to problems created in image-forming apparatuses by arranging the data in data receiving order as illustrated in Fig. 17. The data is then displayed on a display of a request-dealing computer to be supervised by an operator.

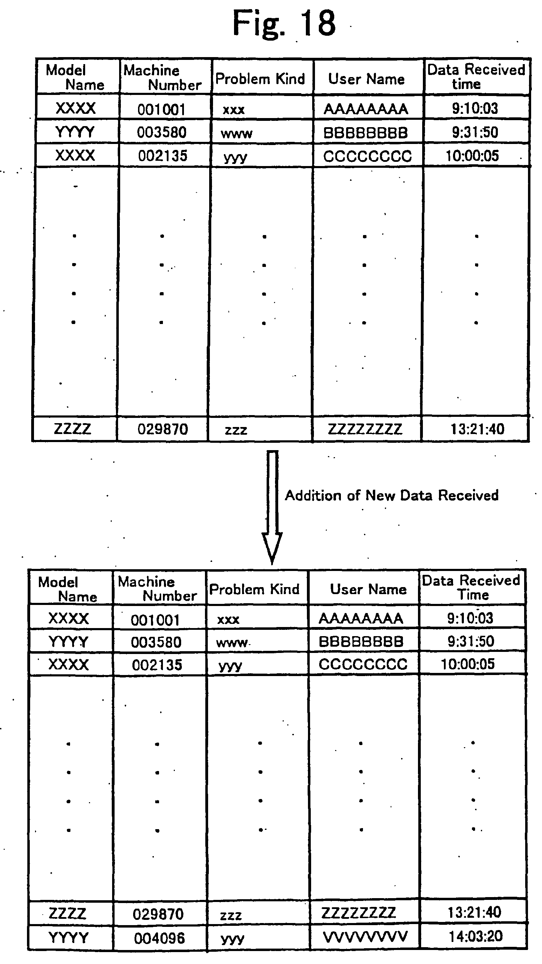

The data displayed on the display can be changed using a keyboard or a mouse so that the operator can search the data desired. Contents of the table (T1) can be renewed either by adding newly received data thereto or deleting data therefrom when the image-forming apparatus having the problem indicated by the data has been resolved as illustrated in Fig. 18.

However, since the problem data is displayed on the display in a data receiving order and in the same color, issues as described below may occur. First, problem data sent from a very important user, or an image-forming apparatus which is to be given priority over others, cannot be easily identified by the staff of the request-dealing computer through the display. Second, a case in which problem data to which a priority is not given may tend to increase in number.

US 4,870,566 discloses a system which allows a plurality of users to communicate with a central memory. A plurality of port interface adapter microprocessors are used to directly set up and control the DMA operation.

US 5,202,726 discloses a reproduction machine having a user interface comprising a display which displays servicing procedures that can be performed.

In consideration of the above problems, it is an aim of the present invention to provide a new system that efficiently deals with for example, a user request. The invention is described in the appended independent claim 1.

The display controlling device can further control a displaying device such that user request data are displayed in order of user request data receipt when a plurality of user request data having the same priority are received. The displaying device can further display the user request data having different priority levels in different colors.

The request-dealing computer can include a response-time-setting device, through which a prescribed timer period corresponding to a kind of image-forming apparatus or a user for dealing the user request are input, and displaying device that displays user request data in a different manner when the user request data has not yet been dealt within the prescribed time period set by the response-time-setting device. The display-controlling device can give first priority to user request data that have not yet been dealt within a prescribed time period and then arranges a plurality of user request data in a prescribed priority order.

The invention will be described below with reference to exemplary embodiments and the accompanying drawings in which:
Fig. 1 is a block chart that illustrates a constitution of a remote diagnosis system as one of examples of the present invention;
Fig. 2 is a block chart that illustrates a constitution of a central computer system of the remote diagnosis system illustrated in Fig. 1;
Fig. 3 is a block chart that illustrates a constitution of a request-receiving computer of the remote diagnosis system illustrated in Fig. 1;
Fig. 4 is a chart that illustrates a format of a manual call data to be stored in a HDD employed in the request-receiving computer illustrated in Fig. 3;
Fig. 5 is a chart that illustrates a user database registered in another HDD stored in a DB server of the request-receiving computer;
Fig. 6 is a chart that illustrates a staff-supervising table registered in the other HDD stored in the DB server;
Fig. 7 is a block chart that illustrates a constitution of a control part of an image-forming apparatus illustrated in Fig. 1;
Fig. 8 is a flow chart that illustrates one of examples of a distribution process of manual call data, which is executed by a CPU employed in the request-receiving computer illustrated in Fig. 3;
Fig. 9 is a block chart that illustrates a constitution of a background request-receiving computer;
Fig. 10 is flow chart that illustrates a request data dealing process executed by the background request-receiving computer illustrated in Fig. 9;
Fig. 11 is a chart that illustrates one of examples of a reception data table stored in the HDD illustrated in Fig. 2;
Fig. 12 is a chart that illustrates one of examples of a table indicating a dealing order of user requests of priority;
Fig. 13 is a chart that illustrates one of examples of a table indicating both priority levels of user request-dealing order and colors corresponding to the priority levels;
Fig. 14 is a chart that illustrates one of examples of a table in which a plurality of user request data are arranged in a dealing order of priority;
Fig. 15 is a chart that illustrates one of examples of a table, in which a plurality of user request data are arranged in a prescribed order when a plurality of user request data are simultaneously received;
Fig. 16 is a chart that illustrates one of examples of a table, in which a plurality of user request data are arranged in a prescribed order when a plurality of problem data are simultaneously received;
Fig. 17 is a chart that illustrates a table used in a background remote diagnosis system, in which a plurality of user request data arranged in a prescribed order;
Fig. 18 is a chart that illustrates a table used in a background remote diagnosis system, in which a plurality of user request data are arranged in a prescribed order and renewed when new user request data is added;
Fig. 19 is a chart that illustrates a table used in a background remote diagnosis system, in which a plurality of user request data are arranged in a prescribed order and renewed when the user request data is deleted due to the request having been dealt;
Fig. 20 is a graph that illustrates a relation between an elapsing time and a fixing temperature when an electrical power source switch is successively turned ON and OFF at a time when a problem is created in an image-forming apparatus;
Fig. 21 is a chart that illustrates one of examples of a table to be provided in the HDD, in which service person call numbers are stored;
Fig. 22 is a flow chart that illustrates one of problem data dealing processes to be executed by a central computer system of another embodiment of the present invention;
Fig. 23 is a chart that illustrates a format to be stored in a RAM employed in the central computer system, in which problem data related to an problem created in an image-forming apparatus is included;
Fig. 24 is a flow chart that illustrates one of examples of a reset command transmitting and receiving process to be executed by a central computer system and an image-forming apparatus respectively;
Fig. 25 is a timing chart that illustrates a timing of a reset command transmission from a central computer system and a timing of receipt of a reset command by an image-forming apparatus of the other embodiment of the present invention, when the image- forming apparatus is not executing an image formation;
Fig. 26 is a timing chart that illustrates a timing of a reset command transmission from the central computer system and a timing receipt of a reset command by the image-forming apparatus of the other embodiment of the present invention, when the image-forming apparatus is executing an image formation and a service person call remains; and
Fig. 27 is a timing chart that illustrates a timing of a reset command transmission from the central computer system and a timing of receipt of a reset command by the image-forming apparatus of the other embodiment of the present invention, when the image-forming apparatus is not executing an image formation and a service person call remains.

In the drawings, like reference numerals designate identical or corresponding parts through out the several views.

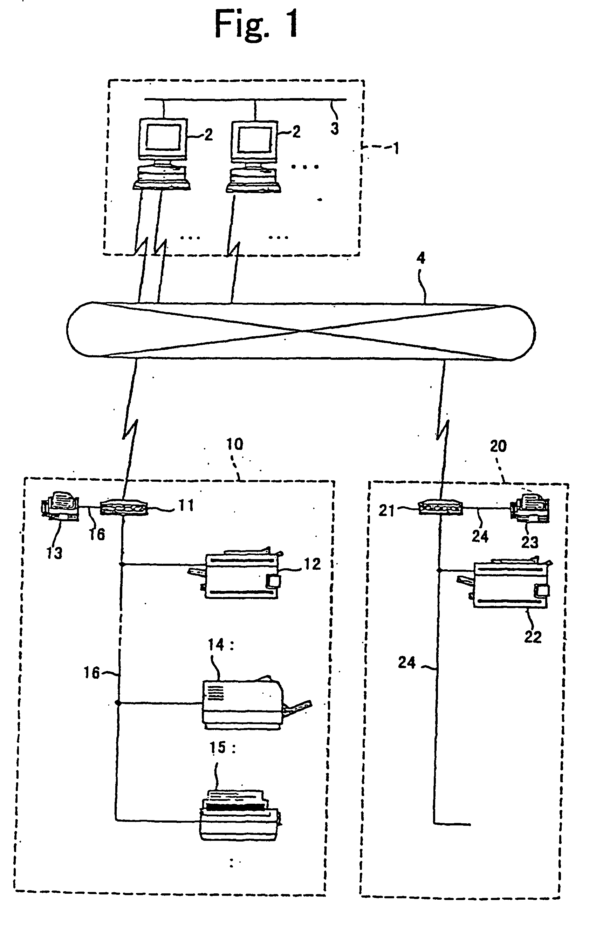

Hereinbelow , a first embodiment of the present invention is explained referring to Figs. 1 through 10. A constitution of a remote diagnosis system including a plurality of image-forming apparatuses as one of the embodiments of the present invention is in a chart illustrated in Fig. 1.

The remote diagnosis system may include a central-computer sub-system 50 and a plurality of image-forming apparatus groups 10 and 20 located at a plurality of user sides. Since conventional converters are employed, explanations thereof are omitted.

Each of the groups of image-forming apparatuses 10 and 20 is constituted by a communication adapter 11 (21) that is connected to the central-computer-sub system 50 by a public communication network 4, a variety kinds of image-forming apparatuses such as a copier 12 (22), a facsimile 13 (23), a printer 14 (24), a duplicating machine 15 (25), and so on, and a private use interface line 16 (24) (hereinafter referred to as an I/F line 16 (24)) that connects each of the image-forming apparatuses with the communication adapter 11 (21).

The I/F line 16 (24) is constituted by a wire. However, it can be wireless or fibre optic if desired. The central computer sub-system 50 includes a plurality of request-receiving computers 2 explained later in detail and a network 3 such as a LAN (Local Area Network) that connects each of the request-receiving computers 2 with others. The plurality of request-receiving computers 2 is connected with each of the image-forming apparatuses 12, 13, 14, 15 via the public communication network 4, the communication adapter 11 (21), and the I/F line 16 (24).

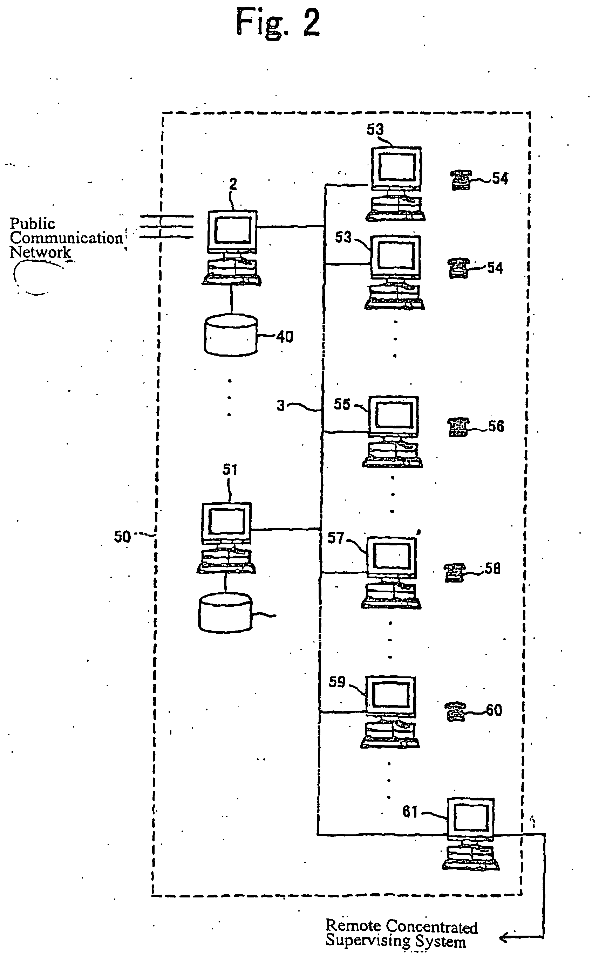

One of examples of the central-computer sub-system is illustrated in Fig. 2. The central-computer-sub system 50 includes a plurality of request-receiving computers 2 each having a HDD 40 therein and a database (hereinafter referred to as a DB) server 51 having HDD 52 therein.

The central-computer sub-system 50 further includes a plurality of copier request-dealing computers 53 with corresponding telephones 54, a plurality of facsimile request-dealing computers 55 with corresponding telephones 56, a plurality of printer request-dealing computers 57 with corresponding telephones 58, a plurality of duplicator request-dealing computers 59 with corresponding telephones 60, a gateway terminal computer 61, and a network 3 that connects each of the terminal computers with others.

A reception database is registered in the HDD 40 beforehand, so that manual call data (hereinafter referred to as MC data) related to a request by of a user, which are sent from their image-forming apparatuses 12, 22, and so on, are stored in the database. A user database and a staff supervising table are each also registered in the HDD 52 of the DB server 1 beforehand.

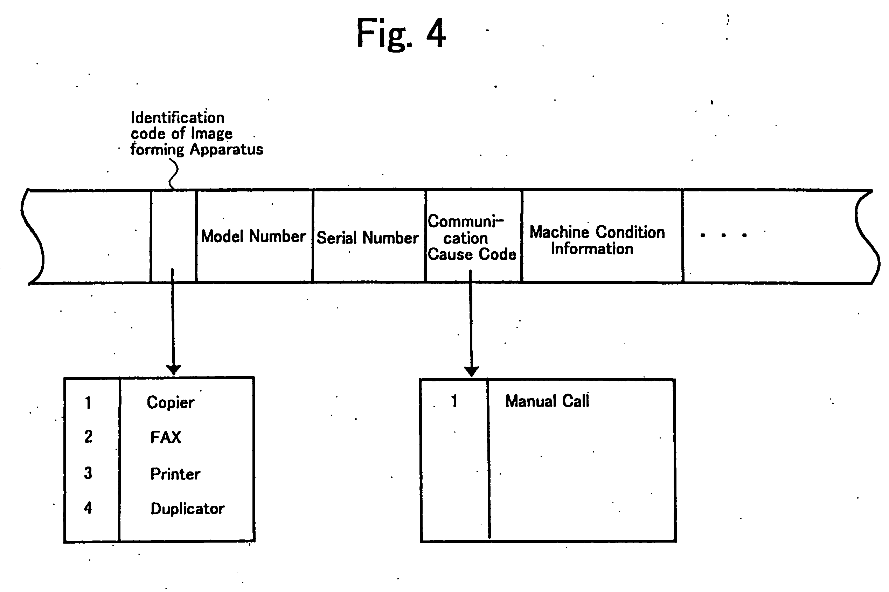

One example of a data format of the MC data, which is to be transmitted from the user and to be stored in the reception DB of the HDD 40 of the request-receiving computer 2 when received by the request-receiving computer 2 is illustrated in Fig. 4. The data format comprises an identification data code for identifying a kind of an image-forming apparatus, a model number, a serial number, a request cause code, data related to a machine condition, and so on.

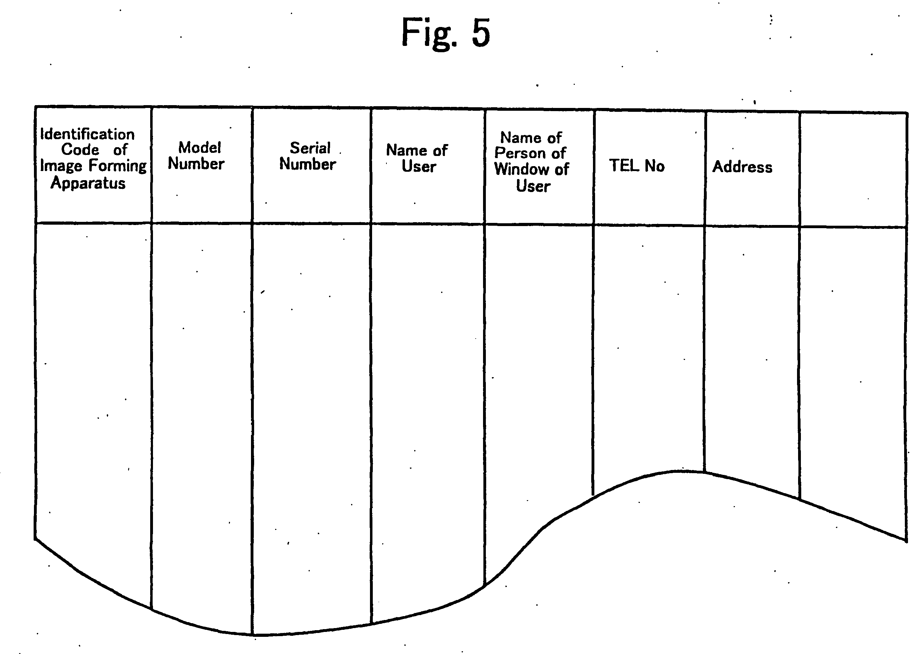

One example of a user database stand in the HDD 52 of the DB server 51 is illustrated in Fig. 5. The user database stores data related to model numbers allocated to each kind of image-forming apparatuses having different codes, serial numbers, user names, names of contact persons, telephone numbers, addresses of users, and so on.

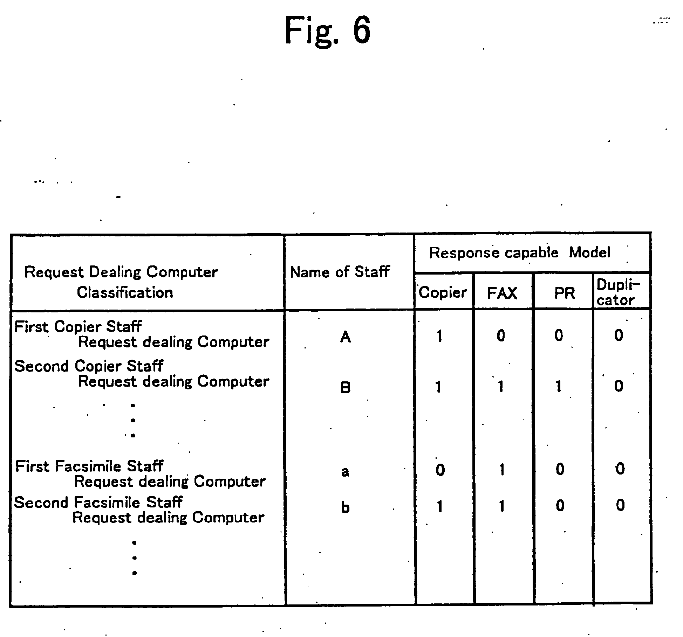

One of examples of the staff-supervising table is illustrated in Fig. 6. The staff-supervising table stores data relating to names of staff members allocated to each request-dealing computer, and names of models that are capable of responding to MCs. In the staff-supervising table, number 1 indicates that a request-dealing computer described in a request-dealing computer classification column can respond to a request from a model described in a request-dealing computer responsible model column. Whereas, number 0 indicates that a request-dealing computer described in a request-dealing computer classification column cannot respond to a request from a model described in a request-dealing computer responsible model column.

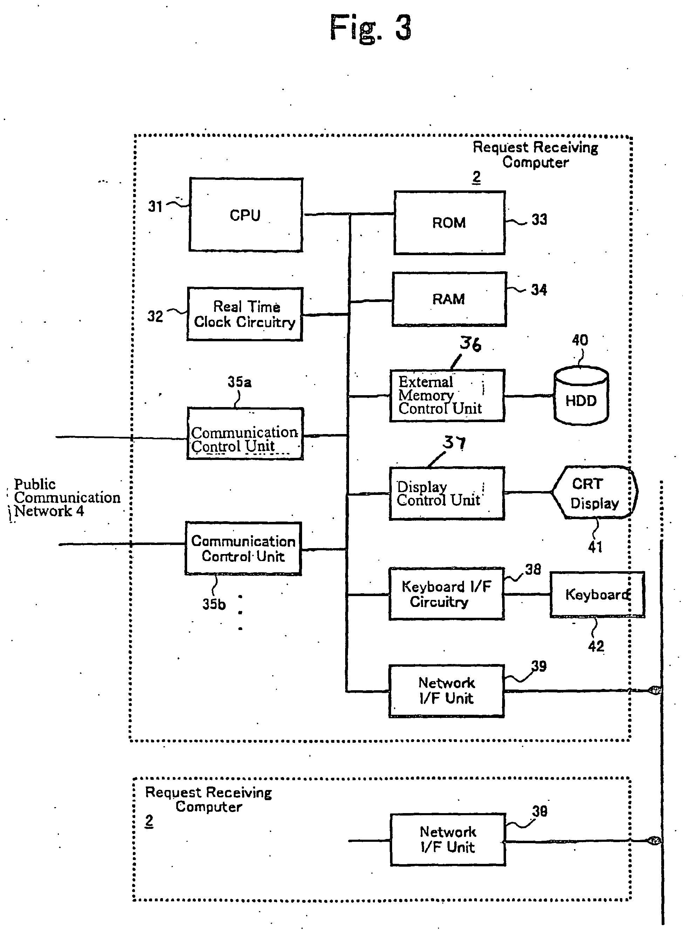

One example of a constitution of the request-receiving computer 2 illustrated in Fig. 2 is illustrated in Fig. 3. Each of the request-receiving computers 2 includes a CPU (Central Processing Unit) 31, a real time clock circuitry 32, a ROM (Read Only Memory) 33, a RAM (Random Access Memory) 34, and a plurality of data communication control units 35a, 35b, and so on. Each of the request-receiving computers 2 further includes, an external memory control unit 36, a display control unit 37, a keyboard I/F circuitry part 38, a network I/F unit 39, a HDD 40, a cathode ray tube (hereinafter referred to as a CRT) display 41, a keyboard 42, and so on.

The CPU 31 controls request-receiving computers 2 using a control program stored in the ROM 33. The real time clock circuitry 32 generates time data to be read by the CPU 31. The ROM 33 stores therein static data including the control program used by the CPU 31.

The RAM 34 is constituted such that data is freely read therefrom and written thereto. The RAM 34 may serve as a working memory or the like to be used by the CPU 31 when the CPU 31 handles the data. The plurality of data communication control units 35a, 35b and so on control data communication to the image-forming apparatuses through the public communication network 4. The external-memory-control unit 36 controls an interface between the CPU 31 and the HDD 40. The display-control unit 37 controls an interface between the CPU 31 and the CRT display 41. The keyboard I/F circuitry part 38 controls an interface between the CPU 31 and the keyboard 42.

The network I/F unit 39 controls an interface between the DB server 51, the copier request-dealing computer 53, the facsimile request-dealing computer 55, the printer request-dealing computer 57, the duplicator request-dealing computer 59, the gateway terminal computer 61, and so on. Since the DB server 51 illustrated in Fig. 2 has almost the same constitution as the request-receiving computer 2, a detailed explanation thereof is omitted.

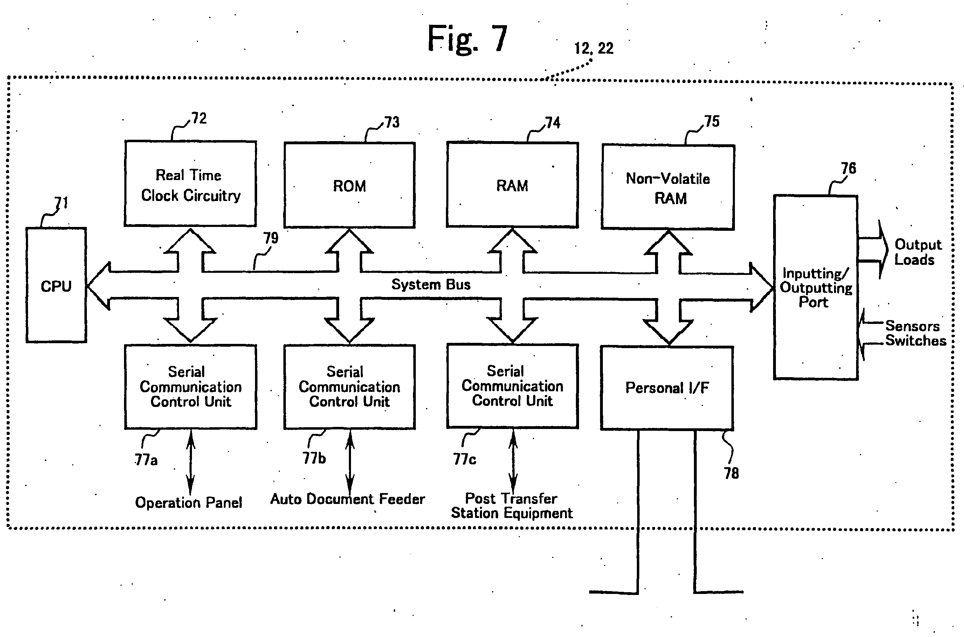

A constitution of a control part of the copier 12 (22) shown in Fig. 1 is illustrated in Fig. 7. The control part includes a CPU 71, a real time clock circuitry 72, a ROM 73, a RAM 74, a non-volatile RAM 75, an input-output (I/O)port 76, a serial communication control unit 77a, 77b, 77c, a personal I/F 78, and a system bus 79. The CPU 71 controls the copier based on a control program stored in the ROM 73. The real time clock circuitry 72 generates time data to be read by the CPU 71. The ROM 73 stores a variety of static data including a control program used by the CPU 71.

The RAM 74 is constituted such that data is freely read therefrom and written thereto such as a working memory used by the CPU 71 when it handles data. The non-volatile RAM 75 stores data indicating, for example, operation modes of the copier which are generated by an operator, for example, through an operation panel not shown. Batteries, not shown, backup the non-volatile RAM 75. The input-output port 76 connects with load-generating members such as motors, solenoids, or clutches, as well as sensors and switches, not shown, employed in the copier.

The serial communication control unit 77a communicates signals with the operation panel. The serial communication control unit 77b communicates signals with an auto document feeder, not shown. The serial communication control unit 77c communicates signals with a post transfer station part, not shown.

The personal I/F 78 controls an interface between the communication adapter 11 (21) and the CPU 71. The personal I/F 78 is provided relieve to load on the CPU 71 when the CPU 71 directly controls its communication with the communication adapter 11 or 21. The personal I/F 78 can be omitted by taking its function into the CPU 71, if the CPU 71 has sufficient data handling capability.

Since control parts of the other image-forming apparatuses such as the printer, and so on, have similar constitutions as the above-mentioned copier, detailed explanations thereof are omitted. Each of the control parts of copiers 12, 22 functions as a user request data inputting device that inputs data related to a user request such as an inquiry of an operation know-how. Each of the control parts of copiers 12, 22 further functions as a user request data sending device that sends the data to a central computer sub-system 50 of the central computer sub system 50.

A control part including the CPU 31 of the request-receiving computer 2 of the central computer sub-system 50 illustrated in Figs 2 and 3 may function as a request-receiving device that receives MC data as user request data transmitted from any of the image-forming apparatuses illustrated in Fig. 1. The control part of the request-receiving computer may further function as a request-data-distributing device that automatically distributes user request data when received to a prescribed request-dealing computer.

The user-request-data-distributing device may include a request-dealing computer determining member that determines a prescribed request-dealing computer to which the user request data is to be transferred and a request-data-remaining determining member that determines if a prescribed request-dealing computer has user request data remaining to be dealt with. The request-data-distributing device may further include a user-request-data-transferring member that transfers user request data to the prescribed request-dealing computer.

The request-data-distributing device may further include a user-request-data-remaining-amount-detecting member that determines if the request-dealing computer has a prescribed amount of request data remaining to be dealt. The request-data-distributing device may further include a priority-giving member that gives priority to a prescribed user request data, when a plurality of user request data is received.

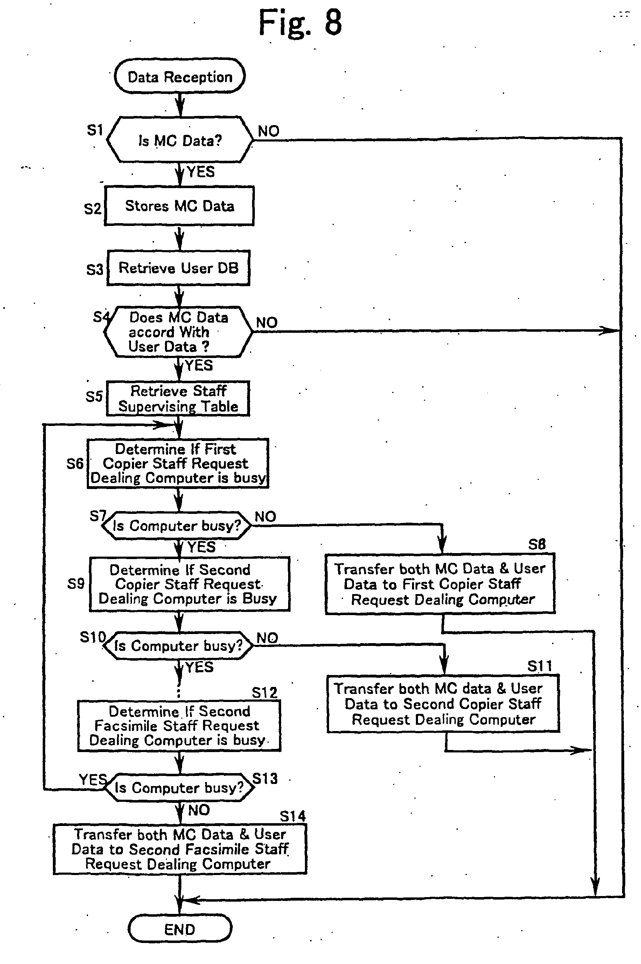

Hereinbelow, an operation of the above mentioned remote diagnosis system is explained in detail referring to Fig. 8. When MC data is input by a user by depressing a manual call key, not shown, an image-forming apparatus such as copiers 12, 22 sends the MC data in a prescribed format as illustrated in Fig. 4 to a central-computer-sub system 50 via a private I/F line 16 or 24, a communication adapter 11 or 21, and a public communication line network 4. A request-receiving computer 2 of the central-computer sub-system 50 receives the MC data and handles it in a manner as illustrated in Fig. 8. One example of the operation of the distribution of the MC data by the CPU 31 of the request-receiving computer 2 is illustrated in Fig. 8 using a flow chart.

When the CPU 31 receives data from any one of the image-forming apparatuses, it determines if the data includes MC data therein by referring to a code included in the format, which indicates a cause of a data communication (step-1). If the MC data are included therein, the CPU 31 stores the MC data in a reception DB of a HDD 40 (step-2). The CPU 31 then retrieves a user DB stored in the HDD 52 of a DB server 51 using the image-forming-apparatus identification data code (hereinafter referred to as an ID code), the name of a model, and the serial number included in the MC data to find a prescribed user data (step-3).

If the prescribed user data is found, namely a prescribed user data accords with the image-forming apparatus ID code, and so on (step-4), the CPU 31 then retrieves a staff-supervising table stored in the HDD 52 of the DB server 51 using the image-forming apparatus ID code to determine a prescribed request-dealing computer as a recipient of the MC data (step-5). Determination of the prescribed user-request-dealing computer is explained below. If the image-forming apparatus ID code indicates "1", the MC data is recognized as is transferred from a kind of a copier.

As illustrated in Fig. 6, request-dealing computers indicating "1" in a column of the staff-supervising table, and capable of responding to the user request of the MC data are both a first and a second copier request-dealing computers 53, and a second facsimile request-dealing computer 55. Thus, any one of request-dealing computers 53, 55 are determined as a recipient of the user data.

The CPU 31 then judges whether the first copier request-dealing computer 53 is in a busy state in which a previous user request has not yet been dealt with (step-6). If the first copier request-dealing computer 53 is not in the busy state (step-7), the CPU 31 sends the MC data and user data extracted from the user DB to the first copier request-dealing computer 53 through a network 3 (step-8).

If the first copier request-dealing computer 53 is in the busy state (step-8), it is judged whether the second copier request-dealing computer is busy (step-9). If the second copier request-dealing computer 53 is not in the busy state (step-10), the CPU 31 sends both the MC data and user data to the second copier request-dealing computer 53 (step-11).

If the second copier request-dealing computer 53 is also in the busy state (step-10) and another copier request-dealing computer indicating "1" in the column of the staff-supervising table exists, the same operation as mentioned above is repeatedly executed to the other copiers by the CPU 31. If all copier request-dealing computers are in the busy state, a second facsimile request-dealing computer 55 is judged whether it is busy (step-12).

If the second facsimile request-dealing computer 55 is not in the busy state (step-13), the CPU 31 sends both the MC data and user data to the second facsimile request-dealing computer 53 (step-14). If the second facsimile request-dealing computer 55 is also in a busy state (step-13), the first copier request-dealing computer 53 is judged again whether it is still busy. The CPU 31 then executes the same operation as mentioned above.

Dealing of the user request is executed in a manner as described below. Each of the request-dealing computers displays contents of both MC data and user data on a display, such as a CRT display, when received both the MC data and user data. A staff of the request-dealing computer can identify the model of the image-forming apparatus, the user's name, the name of a contact person, the telephone number of the user, and so on when both data are displayed on the display, each is included in the MC data and user data. Thus, the staff can respond to the request of the user, for example, by making a telephone call to instruct the user.

Thus, an operator for the request-receiving computer 2 can be omitted. Further, even though both a request-receiving computer and a communication line are increasingly required corresponding to an increase in an amount of MC data, the remote diagnosis system as mentioned above can quickly deal with user requests without employing needless operators of the request-receiving computer 2. Also, operation mistakes made by the operator can be reduced. Further, amounts of work can be made almost even, that is not concentrated onto a particular person or persons. The CPU 31 of the request-receiving computer 2 can recognize a request-dealing computer as busy when it has remaining a plurality of user requests, such as ten requests or more, to be dealt with.

Further, if an operator is notified by the user who has sent a manual call when making a telephone call that an image-forming apparatus of the user has some kind of a problem, the operator may input data indicating such a problem into his or her request-dealing computer, and then send the data to a remote-concentrated-supervising system, not shown, that resolves the problem through the gateway terminal computer 61. The remote concentrated supervising may instruct a service person to call on the user, for example, to repair the image-forming apparatus.

Further, the request-receiving computer may deal with MC data in an order of a priority, when a plurality of MC data is simultaneously received. For example, a priority order is given to user data A, B and C. Accordingly, when the request-receiving computer simultaneously receives all of the user data, each of MC data A, B and C is dealt in this order by the request-receiving computer 2.

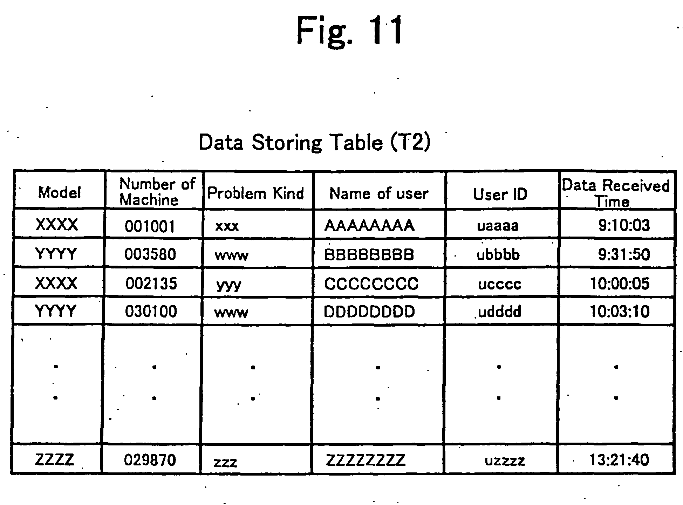

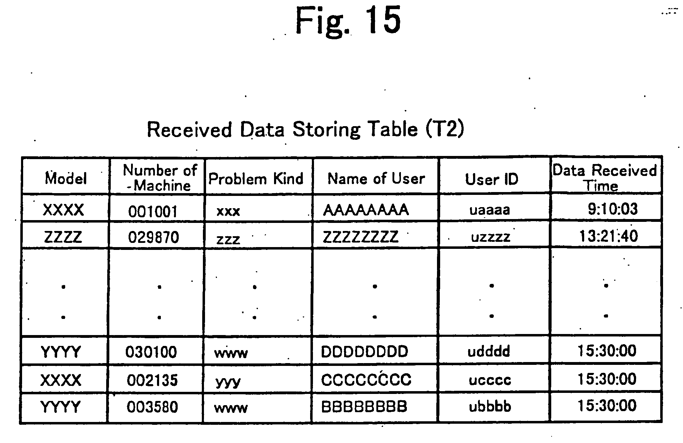

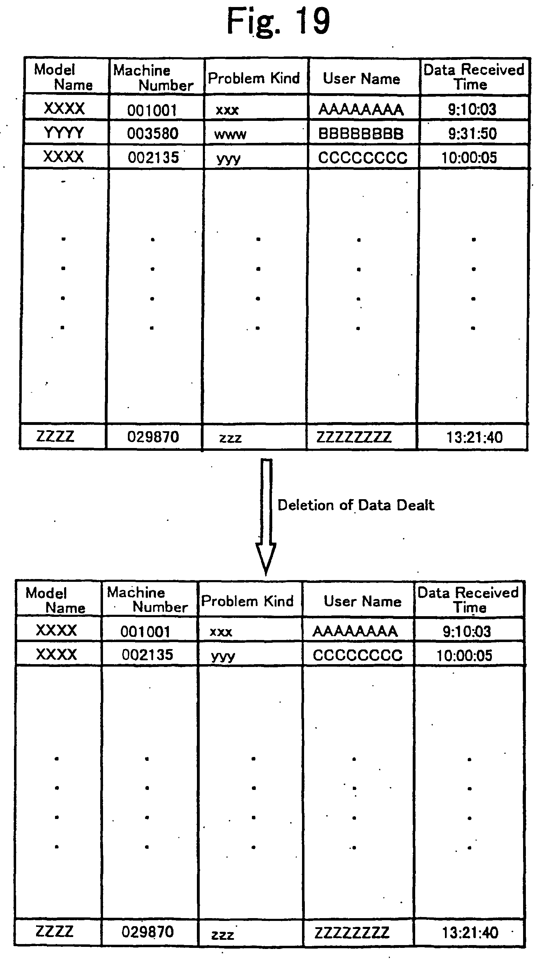

Hereinbelow, another embodiment of the present invention is explained in detail referring to Figs. 11 through 19. When a problem occurs in any of the image-forming apparatuses 12, 22, data related to the problem are transmitted to a central computer sub system 50 via a private use I/F line 16a, 16b or 24a, 24b, a communication adapter 11 or 22, and a public communication network 4 along with MC data such as an image-forming ID code, or a user ID code, and so on during a self calling of the image-forming apparatus.

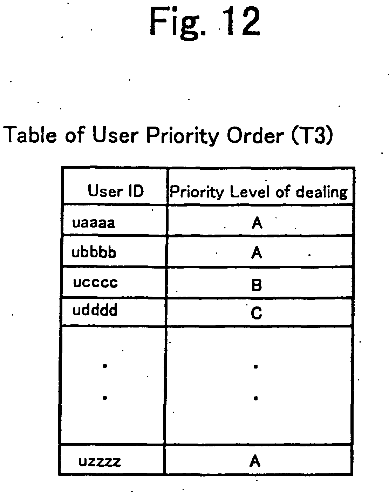

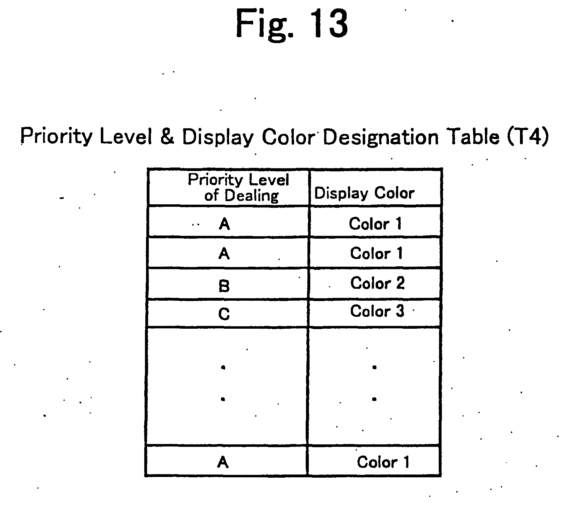

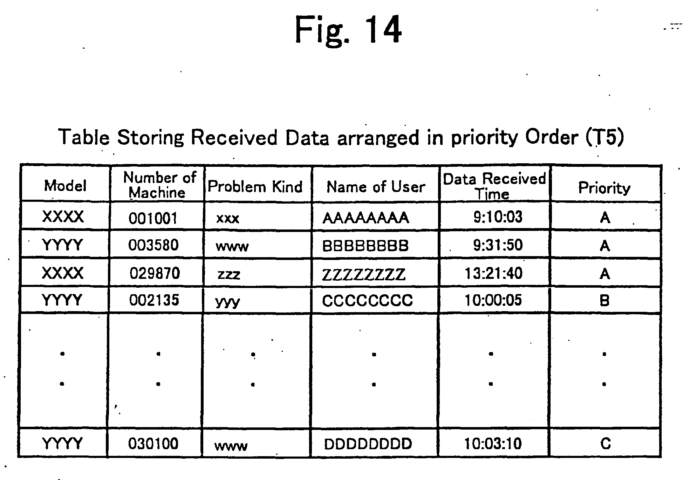

The request receiving computers 2 of the central computer sub system 50 provides a table (T2) in which data relating to the problem occurring in any of the image-forming apparatuses, are stored in order of a data receiving time as illustrated in Fig. 11. The request-receiving computer 2 further provides a table (T3) in which a plurality of user ID codes or image-forming apparatus ID codes, and data of a plurality of priority levels of a resolution of problems are stored as illustrated in Fig. 12. The request-receiving computer 2 further employs a table (T4) in which the data of the plurality of priority levels and a plurality of different color data each designated corresponding to each of the plurality of priority levels are registered as illustrated in Fig. 13. The HDD 40 provides a table (T5) in which a plurality of data received by the HDD 40 is stored in a dealing order of priority as illustrated in Fig. 14. The HDD 40 further stores software (program) that resolves a problem.

The tables and the software stored in the HDD will not be erased even if the electrical power supply source to the HDD 40 is stopped. Further, data of both the tables and the software respectively provided and stored in the HDD 40 are copied to the RAM 34 every time electrical power is newly supplied to the HDD 40. The tables of the HDD 40 are renewed when the tables stored in the RAM 34 are renewed. Each of the tables can be stored in a non-volatile memory such as flash memory or the like.

A priority order may be given to codes A through C illustrated in Fig. 12. A system manager may determine the priority order. The data related to the priority order are input through a keyboard 42 or the like and stored in a ROM 34 by considering below described matters (a) through (c) regarding to the image-forming apparatuses.
(a) Whether a user uses a large number of image-forming- apparatuses is considered. If the user uses, for example, more than around a hundred of image-forming apparatuses, a priority level A is given thereto. (b) Whether a machine down time caused by a problem causes a great deal of disruption to a business of a user is considered. (c) Whether an image-forming apparatus of a user is a model to be importantly supervised is considered.

Each of the request-receiving computers 2 additionally stores new reception data in the table (T2) of the RAM 34 in order as illustrated in Fig. 11, when data related to problems are transmitted thereto from any of the image-forming apparatuses. Each of the request-receiving computers 2 deletes the data from the table (T2) when a prescribed problem indicated by the data has been resolved. The request-receiving computer 2 can be so demanded by the CPU 31.

Every time new reception data indicating a problem or the like are added to the table (T2), or the data stored in the table (T2) are deleted therefrom, all of the data stored in the table (T2) are re-arranged to be listed in order of priority referring to the priority level data registered in the table (T3) of the RAM 34. As a result, a table (T5) illustrated in Fig. 14 can be obtained. If there exists plurality of reception data each having the same priority, they are arranged in order of receipt.

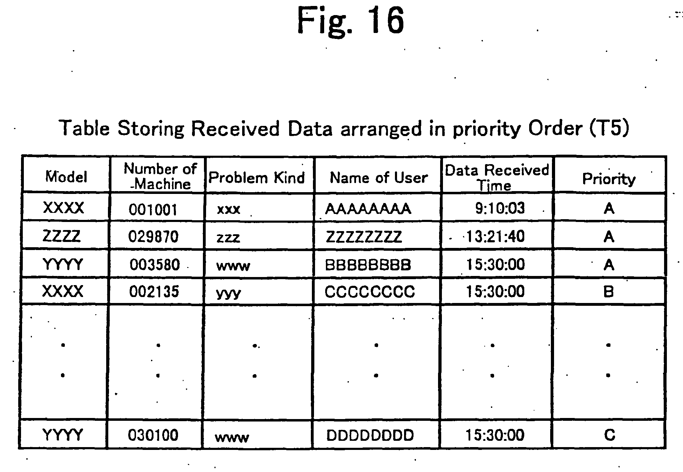

Each of the reception data stored in the table (T5) is displayed on a display 41 illustrated in Fig. 2 in the priority order. Each of the reception data having a different priority level can be displayed in prescribed different colors referring to the table (T4). If a plurality of data relating to the problem is received from a plurality of image-forming apparatuses respectively, the table (T5) can be renewed by re-arranging the data stored therein including the new data in the priority order as illustrated in Fig. 16.

The operator who operates the request-receiving computer 2 can easily discriminate reception data having a higher priority to be handled through the display surely, since the higher priority level of the reception data, the higher it is displayed on the display. This is also because, a plurality of reception data is displayed in priority order and then order of receipt when a plurality of data having a same priority is received. In other words, the operator can easily identify a user that urgently requires, for example, a repair of the image-forming apparatus surely. As a result, a claim from users can be relatively decreased.

To easily identify reception data that has not been dealt with within a prescribed time period after the data is received, below described devices may be provided. The HDD 40 can store a plurality of time data related to the prescribed time period. The CPU 31 of the request-receiving computer 2 compares a time period starting from when the data is received from an image-forming apparatus and the prescribed time period, which is stored in the HDD 40. The request-receiving computer 2 may then display the reception data in a prescribed color indicating the first priority, when the time period exceeds the prescribed time period. The reception data can be also displayed in a blinking manner such that a part displaying the reception data goes on and off.

Thus, if reception data to be dealt still remains after a prescribed time has elapsed, the operator can easily identify the same. As a result, reception data having a relatively lower priority also can be dealt with, since almost all reception data having a relatively higher priority level has been dealt. Further, after a first priority level (A) is given to data that has not yet dealt within a prescribed time period after the data is received by the request-receiving computer 2, a plurality of data can be rearranged in a priority order. Further, the reception data can be also displayed in the same manner as mentioned above.

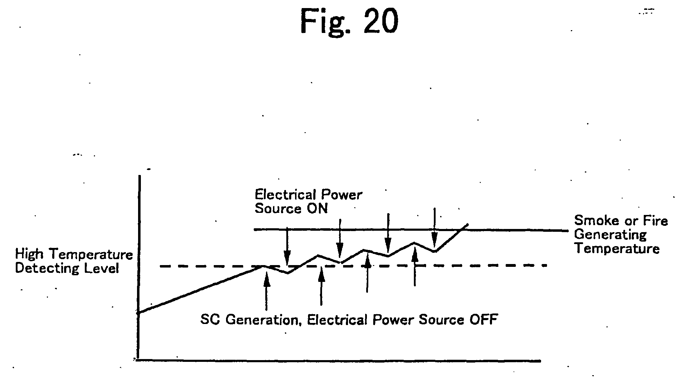

Hereinbelow, still another embodiment of the present invention is explained referring to Figs. 20 through 27. When problems occur in an image-forming apparatus, a user may make a service-person-call (hereinafter referred to as a SC). Even though there exists a slight difference between each of models of image-forming apparatuses, some kinds of problem occurring in a high voltage unit such as a discharge device, or a fixing device of the image-forming-apparatuses cannot be resolved by resetting the status of the image-forming apparatus of the problem.

For example, since the fixing device may have a high temperature, it inherently has a probability to cause smoke or fire. Thus, if a user turns a switch OFF to stop supplying electrical power to the fixing device, and shortly after that turns the switch ON to reset the status of the image-forming apparatus having a problem, and repeats such switching operations without removing the cause of a problem which is occurring in the fixing device, the fixing temperature may reach such a level so as to generate smoke and the fire level, as illustrated in Fig. 20.

Problems that cannot be resolved by resetting the status of the image-forming apparatuses include a fixing temperature higher than a prescribed uppermost limit or lower than a prescribed lowermost limit. The problems further include broken wires of a thermometer of the fixing temperature detecting device, when a fixing heater continues going on when the image-forming apparatus is in a reload mode, and when a fan motor of the fixing device is locked, and so on.

Another kind of problem that cannot be resolved by resetting a status of the image-forming apparatus of the problem may occur in a series of AC (alternating current) devices such as a discharging device that uses a high voltage of an alternating current, since those may be dangerous for a user and also have a probability causing smoke and fire. Problems that occur in the AC device series may include discharge leakage caused by mis-adjustment of a discharge voltage, transfer discharge leakage caused by a mis-adjustment of a transfer discharge voltage, and separating discharge leakage caused by a mis-adjustment of a separating discharge voltage, and so on.

Whereas, problems occurring in devices other than the fixing device series and the AC device series can generally be resolved by resetting a status of an image-forming apparatus. Such problems may include abnormal operation of a reading device series or one of its components such as the lamp, its controller, the scanner, its controller, the magnification device and the filter. The problems may further include abnormal operation of a writing device series or a duplex device series, and a paper feeding/transporting device series, for example, a paper jam.

The problems may further include communication errors in a data communicating device, for example, between internal devices of the image-forming apparatus or between the image-forming apparatus and optional devices, such as peripheral devices e.g. an automatic document feeder, a sorter, and finisher. The problems may further include abnormal operation of peripheral devices or counter device series, and so on.

In this embodiment, each of the controllers of the request-receiving computers 2 may function as a user problem resolution determining device that determines if an problem has been resolved by the user resetting the status of a malfunctioning image forming apparatus. The controllers of the request-receiving computers.2 further may function as a reset-command-transmitting device that transmits a reset command to an image-forming apparatus. Each of controllers included in the image-forming-apparatuses may function a condition-determining-device that determines a condition of the image-forming apparatus, a response-returning-device that returns a prescribed response depending on the condition of the image-forming apparatus, and a reset-operation-executing device that executes a reset operation of the image-forming apparatus.

Hereinbelow, operation of the above-mentioned remote diagnosis system is explained in detail referring to Figs 20 through 27. When a problem occurs in one of the image-forming apparatuses 12 and 22, data related to the problem is automatically transmitted by a self-call of the image-forming apparatus to a central-computer sub-system 50 via a private I/F lines 16a, 16b or 24a, 24b, a communication adapter 11 or 21, and a public communication network as a service person call (a SC).

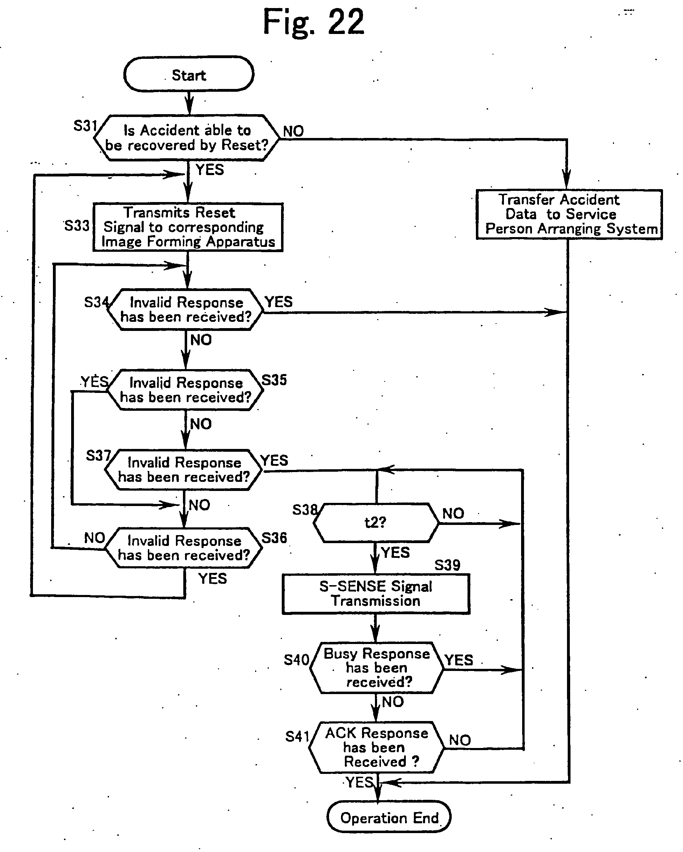

The central-computer sub-system 50 handles the SC as described below. One example of handling of the SC after the central-computer sub-system 50 has received the SC is illustrated in Fig. 22 using a flow chart. When the central-computer sub-system 50 has received a SC from an image-forming apparatus that has a problem, a request-dealing computer 53, 55 determines whether the SC can be resolved by resetting a status of the image-forming apparatus of the problem by the reset command (step-1).

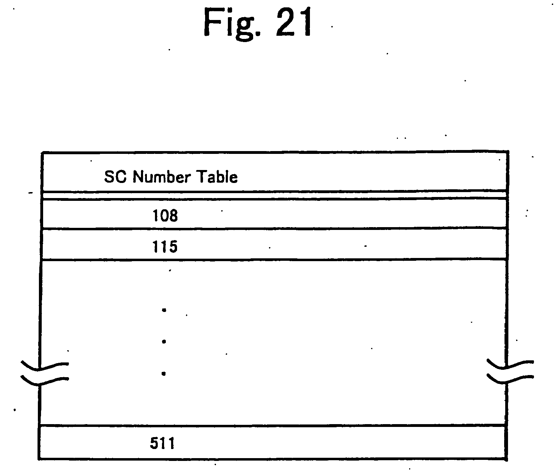

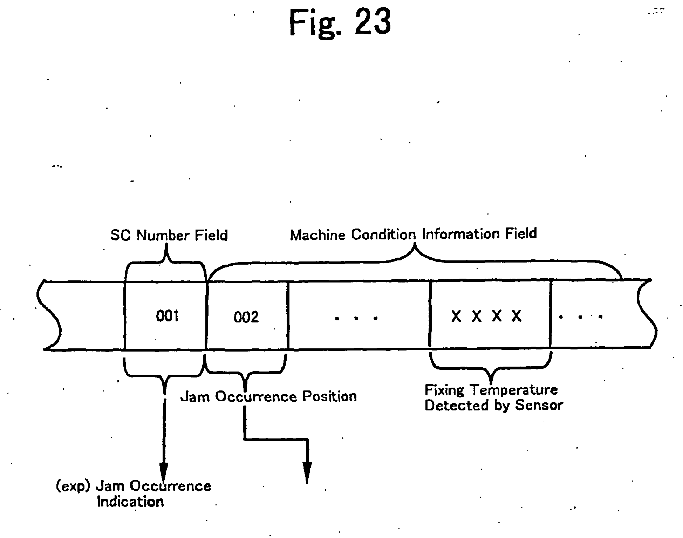

A SC number table as illustrated in Fig. 21 that is referred by the request-dealing computer 53, 55 when it determines whether a SC can be dealt by the above-mentioned manner is provided in a HDD 40 before hand by inputting the SC number through an outer memory control unit 36. The CPU 31 of the request-dealing computer 53, 55 of the central-computer sub-system 50 controls storing of SC data included in a prescribed format as illustrated in Fig. 23 in a RAM 34 through a data communication unit 35a, 35b, and so on, when the request-dealing computer 53, 55 receives the SC from the image-forming apparatus.

A SC number put in a SC number field of the SC data format is compared with SC numbers, which is included in a SC number table registered in the HDD 40, one after another. If the SC number of the format accords with one of the SC number stored in the table, namely the problem has created in devices except for fixing device series or AC device series, the CPU 31 determines that the SC may be dealt by resetting a status of the image-forming apparatus of the problem (step-31).

If the CPU 31 of the request-dealing computer on the other hand determines that the SC cannot be dealt, it transfer the SC data to a service-person-arrange-supervising device, not shown (step-32), and then an operation thereof ends. The service person-arrange-supervising device has a function to display contents of the SC data thereon. An operator of the service person-arrange-supervising device can accordingly send a repair order to a service person.

If the SC can be dealt by resetting a status of the image-forming apparatus of a problem, a reset command is transmitted from the request-dealing computer 2 to the image-forming apparatus to reset thereof via a public communication network 4, a data communication adapter 11 or 21, and a private I/F lines 16a, 16b or 24a, 24b (step-33). If the CPU 31 of the request-dealing computer receives an INVALID response from the image-forming apparatus, which is generally generated when a problem occurring in the image-forming apparatus has been resolved, for example, by a reset operation of a user, and the INVALID response does not include a BUSY response that is generally generated whilst the image-forming apparatus executes an image formation (step-34), the central-computer sub-system 50 stops data communication with the image-forming apparatus.

Whereas, if the CPU 3 does not receive an INVALID response and instead receives a BUSY response from the image-forming-apparatus (step-35), the CPU transmits a reset command again (step-33) to the image-forming-apparatus when a prescribed time period (t1) has elapsed after a previous transmission of the reset command (step-36).

If, on the other hand, the central computer sub system 50 receives a VALID response that is generated when a corresponding image-forming apparatus is available to accepting a reset command, from the image-forming apparatus (step-38), a reset command is transmitted in a same manner as mentioned above, and a status sensing signal (hereinafter referred to as a S-SENSE signal) is also transmitted thereto a prescribed time period (t2) after the reset command is transmitted (step-38) in a same manner as described above. The S-SENSE signal is transmitted so that the CPU 31 of the request-dealing computer 53 of the central-computer sub-system 50 can determine if the image-forming apparatus has completed its reset operation.

If the central-computer sub-system 50 then receives a BUSY response that is generally generated when a reset operation has not yet been completed from the image-forming apparatus (step-40), the computer system 1 transmits a S-SENSE signal again a prescribed time period (t2) after the previous transmission of the S-SENSE signal (steps-38, 39). If request-dealing computer 53, 55 receives an acknowledge response signal (hereinafter referred to as an ACK response signal) (step-41), a sequence ends.

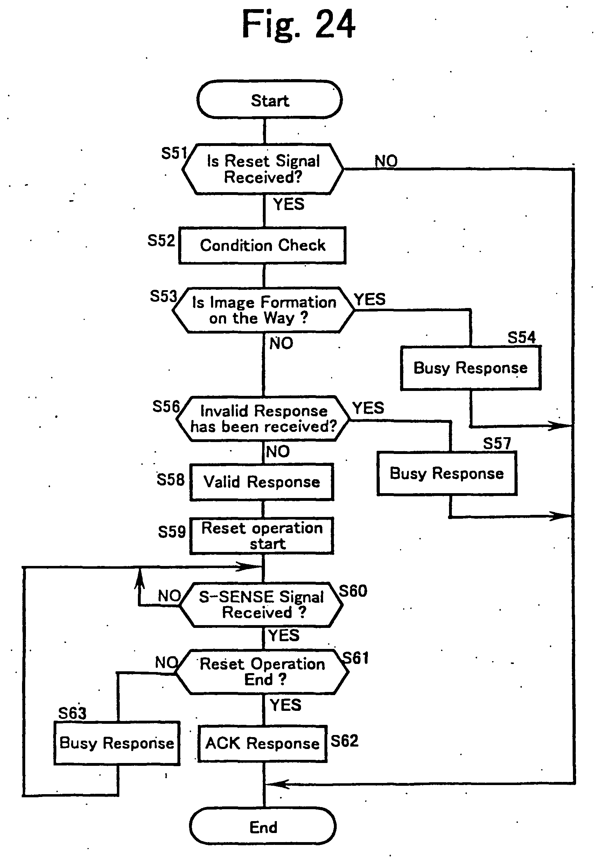

Hereinbelow, a reset operation of an image-forming apparatus is explained in detail referring to Fig. 24. Each of the image-forming apparatuses executes a below-described reset operation after a SC is transmitted to the central-computer sub-system 50 as illustrated in Fig. 24. The controller of the image-forming apparatus 12 or 22 illustrated in Fig. 1 determines if it has received a reset command from the central computer sub system 50 (step-51). The CPU of the personal I/F, for example, inspects a condition of the image-forming apparatus (step-52).

If the CPU determines that a problem has been resolved, for example, by a switch ON/OFF operation of a user (step-53), and an image-formation operation is completed (step-56), the CPU transmits an INVALID response signal indicating that the reset command received is invalid to the central computer sub system 50 (step-57). The sequence then ends. If the image-forming apparatus is not yet completed its operation, the CPU returns a BUSY response signal as an INVALID response to the central-computer sub-system 50 (step-54).

If the CPU recognizes the condition of the image-forming apparatus as that the problems remains and the image-forming-apparatus is completed its operation, the CPU transmits a VALID response signal to the central computer sub system 50 in a same manner as mentioned above (step-58). The CPU then waits a S-SENSE signal to be transmitted from the central computer sub system 50 (step-60). The above-mentioned reset operation forcibly returns a problem status to an initial status of the image-forming apparatus with an electrical power source being supplied.

If the reset operation has been completed by the image-forming apparatus before the CPU receives the S-SENSE signal from the central-computer sub-system 50 (steps-60, 61), the CPU returns an ACK response to the central computer sub system 50 (step-62) in a same manner as mentioned above. If on the other hand the reset operation of the image-forming apparatus is not completed, the CPU transmits a BUSY response signal as an INVALID response to the central computer sub system 50 (step-63) in a same manner as mentioned above. The CPU then further waits another S-SENSE signal from the central computer sub system 50.

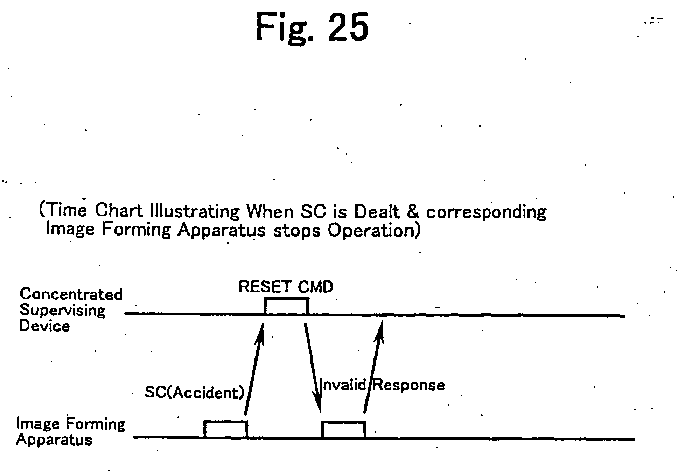

Hereinbelow, an operation of a remote diagnosis system to be executed after an image-forming apparatus has received a reset command is explained in more detail, referring to Figs. 25 through 27. Each of the image-forming apparatus and the central computer sub system 50 may execute below described operations after the image-forming apparatus has received the reset command.

First, when the image-forming-apparatus receives a reset command and if a problem occurring in an image-forming apparatus has been resolved, for example, by a switch ON/OFF operation of a user, the image-forming apparatus returns an INVALID response to the central computer sub system 50 as illustrated in Fig. 25. The reset operation is then not executed.

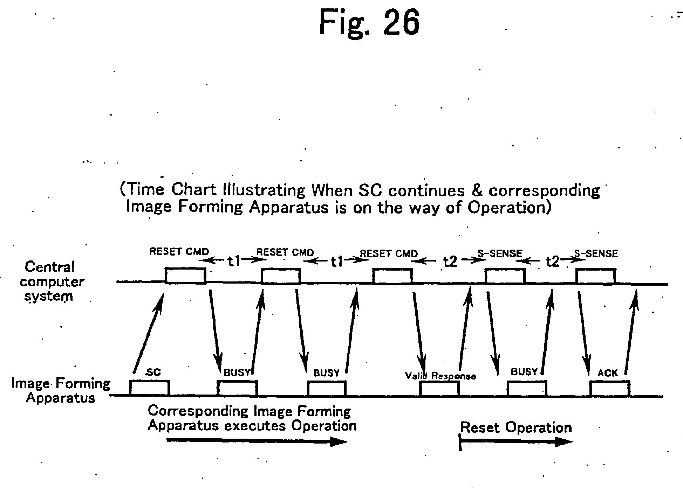

Second, when a problem remains in an image-forming apparatus, for example in peripherals thereof, and the image-forming-apparatus except for the peripherals has not yet completed its operation, a CPU 51 of the image-forming apparatus transmits a BUSY response signal to the central-computer sub-system 50 as illustrated in Fig. 26. The central computer sub system 50 then transmits a reset command to the image-forming apparatus a prescribed time period (t1) after a previous transmission of the reset command. The image-forming apparatus may execute a reset operation, whereas it returns a VALID response to the central computer sub system 50, if it has completed the image formation when it receives a reset command.

The central computer sub system 50 may transmit a S-SENSE signal to the image-forming apparatus a prescribed time period (t2) after transmission of the reset command.

The image-forming apparatus transmits a BUSY response to the central-computer sub-system 50, if a reset operation has not yet been completed.

The central-computer sub-system 50 may transmit anther S-SENSE signal to the image-forming apparatus a prescribed time period (t2) after transmission of the previous S-SENSE signal. The image-forming apparatus returns an ACK signal to the central computer sub system 50, when it receives the S-SENSE signal after the reset operation is completed.

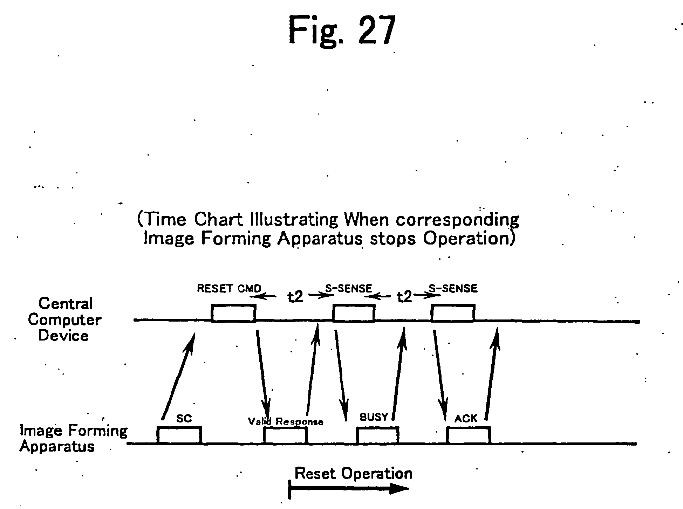

Third, the image-forming apparatus that has received a reset command transmits a VALID response to the central computer sub system 50 and executes a reset operation, if a problem still remains and an image formation is completed as illustrated in Fig. 27. The central computer sub system 50 that has received the VALID response from the image-forming apparatus transmits a S-SENSE signal a prescribed time period (t2) after transmission of the reset command to the image-forming apparatus. The image-forming apparatus that has received the S-SENSE signal transmits a BUSY response to the central computer sub system 50, if the reset operation is not yet completed.

The central computer sub system 50 that has received the BUSY response transmits another S-SENSE signal to the image-forming apparatus the prescribed time period after the previous transmission of the S-SENSE signal. The image-forming apparatus returns an ACK response to the central computer sub system 50, if it receives the other S-SENSE signal after the reset operation is completed.

The image-forming apparatus can returns an ACK response to the central computer sub system 50 to confirm completion of the reset operation, if it received the S-SENSE signal during its reset operation.

Obviously, numerous additional modifications and variations of the present invention are possible in light of the teachings. It is therefore to be understood that within the scope of the appended claims, the present invention may be practiced otherwise than as specifically described herein.

## Claims

1. A central computer system (50) **characterised by** comprising:
a plurality of request-dealing computers (53) each separately taking charge of at least one request transmitting apparatus (12,13,14,15) located at a user site to deal with a plurality of user requests transmitted to said request dealing computers via a communication line (4); and a request-receiving computer, including a user-request-data-distributing device configured to determine a prescribed request-dealing computer to which a user request is to be transferred;
wherein each of said plurality of request-dealing computers comprises:
a user request receiving and storing device (34) configured to receive and store a plurality of the user requests in order of receipt;
a priority order-determining device (31) configured to determine a priority order of dealing with the plurality of user requests;
a displaying device (41) configured to display the plurality of user requests; and
a display controlling device (37) configured to control the displaying device (41) to display the plurality of user requests in the priority order;
wherein the request-receiving computer (2) provides predetermined priority order determining information, in which a priority level is associated with each user and said priority order determining device (31) is arranged to determine the priority order with reference to the priority order determining information.

2. A system according to claim 1, wherein:
said display controlling device (37) is for controlling said displaying device (41) such that user request data are displayed in order of receipt, when a plurality of user request data having the same priority are received by said user request data receiving device.

3. A system according to claim 1 or 2, wherein:
said displaying device (41) is for displaying said user request data having different priority levels in different colors.

4. A system according to claim 1, 2 or 3, wherein:
said request-dealing computer (2) includes a response time setting device (42), through which a prescribed time period corresponding to said kind of image-forming apparatus or user for dealing said user request can be input, and
said displaying device (41) is for displaying overdue user request data, which has not been dealt with within said prescribed time period set by said response time setting device (42), in a different manner.

5. A system according to claim 4, wherein:
said displaying device (41) blinks said overdue user request data.

6. A system according to claim 4 or 5, wherein:
said display controlling device (37) is for giving a first priority to said overdue user request data and then arranges a plurality of user request data in a prescribed priority order.

## Patentansprüche

1. Zentralcomputersystem (50), **dadurch gekennzeichnet, dass** es Folgendes umfasst:
eine Mehrzahl von Anfragebehandlungscomputern (53), die sich jeweils separat um mindestens ein an einem Benutzerort befindliches Anfrageübertragungsgerät (12, 13, 14, 15) kümmern, um eine Mehrzahl von Benutzeranfragen zu behandeln, die an die Anfragebehandlungscomputer via eine Kommunikationsleitung (4) übertragen werden; und einen Anfrageempfangscomputer, einschließlich einer Benutzeranfragedatenverteilungseinrichtung, die konfiguriert ist, um einen vorgeschriebenen Anfragebehandlungscomputer zu bestimmen, an den eine Benutzeranfrage zu übermitteln ist;
wobei jeder aus der Mehrzahl von Anfragebehandlungscomputern Folgendes umfasst:
eine Benutzeranfrageempfangs- und -speichereinrichtung (34), die konfiguriert ist, um eine Mehrzahl der Benutzeranfragen in Empfangsreihenfolge zu empfangen und zu speichern;
eine Prioritätsreihenfolgebestimmungseinrichtung (31), die konfiguriert ist, um eine Prioritätsreihenfolge für das Behandeln der Mehrzahl von Benutzeranfragen zu bestimmen;
eine Anzeigeeinrichtung (41), die konfiguriert ist, um die Mehrzahl von Benutzeranfragen anzuzeigen; und
eine Anzeigesteuerungseinrichtung (37), die konfiguriert ist, um die Anzeigeeinrichtung (41) zu steuern, um die Mehrzahl von Benutzeranfragen in der Prioritätsreihenfolge anzuzeigen;
wobei der Anfrageempfangscomputer (2) vorbestimmte Prioritätsreihenfolgebestimmungsinformationen zur Verfügung stellt, in denen jedem Benutzer ein Prioritätslevel zugeordnet ist, und die Prioritätsreihenfolgebestimmungseinrichtung (31) eingerichtet ist, um die Prioritätsreihenfolge in Bezug auf die Prioritätsreihenfolgebestimmungsinformationen zu bestimmen.

2. System nach Anspruch 1, wobei:
die Anzeigesteuerungseinrichtung (37) dazu dient, die Anzeigeeinrichtung (41) so zu steuern, dass Benutzeranfragedaten in Empfangsreihenfolge angezeigt werden, wenn eine Mehrzahl von Benutzeranfragedaten, welche die gleiche Priorität aufweisen, von der Benutzeranfragedatenempfangseinrichtung empfangen wird.

3. System nach Anspruch 1 oder 2, wobei:
die Anzeigeeinrichtung (41) dazu dient, die Benutzeranfragedaten, welche unterschiedliche Prioritätslevels aufweisen, in unterschiedlichen Farben anzuzeigen.

4. System nach Anspruch 1, 2 oder 3, wobei:
der Anfragebehandlungscomputer (2) eine Antwortzeitfestlegungseinrichtung (42) beinhaltet, durch die eine vorgeschriebene Zeitspanne, die der Art des Bilderzeugungsgeräts oder des Benutzers entspricht, zum Behandeln der Benutzeranfrage eingegeben werden kann, und
die Anzeigeeinrichtung (41) dazu dient, Daten überfälliger Benutzeranfragen, die nicht innerhalb der vorgeschriebenen, von der Antwortzeitfestlegungseinrichtung (42) festgelegten Zeitspanne behandelt worden sind, in anderer Art anzuzeigen.

5. System nach Anspruch 4, wobei:
die Anzeigeeinrichtung (41) die Daten überfälliger Benutzeranfragen blinken lässt.

6. System nach Anspruch 4 oder 5, wobei:
die Anzeigesteuerungseinrichtung (37) dazu dient, den Daten überfälliger Benutzeranfragen erste Priorität zu geben, und dann eine Mehrzahl von Benutzeranfragedaten in einer vorgeschriebenen Prioritätsreihenfolge anordnet.

## Revendications

1. Système informatique central (50), **caractérisé en ce qu'**il comprend :
une pluralité d'ordinateurs gérant des requêtes (53), chacun prenant en charge séparément au moins un appareil de transmission de requête (12, 13, 14, 15) situé sur un site d'utilisateur pour traiter une pluralité de requêtes d'utilisateurs transmises auxdits ordinateurs gérant des requêtes via une ligne de communication (4), et un ordinateur recevant des requêtes, incluant un dispositif de répartition de données de requêtes d'utilisateurs configuré pour déterminer un ordinateur gérant des requêtes prescrit auquel une requête d'utilisateur doit être transférée ;
dans lequel chacun desdits ordinateurs gérant des requêtes comprend :
un dispositif recevant et stockant des requêtes d'utilisateurs (34) configuré pour recevoir et mémoriser une pluralité des requêtes d'utilisateurs dans l'ordre d'arrivée ;
un dispositif déterminant l'ordre de priorité (31) configuré pour déterminer un ordre de priorité de traitement de la pluralité de requêtes d'utilisateurs ;
un dispositif d'affichage (41) configuré pour afficher la pluralité de requêtes d'utilisateurs ; et
un dispositif de commande d'affichage (37) configuré pour commander le dispositif d'affichage (41) pour afficher la pluralité de requêtes d'utilisateurs dans l'ordre de priorité ;
dans lequel l'ordinateur recevant des requêtes (2) fournit de l'information déterminant l'ordre de priorité prédéterminé, dans laquelle un niveau de priorité est associé à chaque utilisateur et ledit dispositif déterminant l'ordre de priorité (31) est adapté pour déterminer l'ordre de priorité d'après l'information déterminant l'ordre de priorité.

2. Système selon la revendication 1, dans lequel ledit dispositif de commande d'affichage (37) sert à commander ledit dispositif d'affichage (41) de telle manière que les données de requêtes d'utilisateurs sont affichées dans l'ordre d'arrivée, quand une pluralité de données de requêtes d'utilisateurs ayant la même priorité sont reçues par ledit dispositif recevant des données de requêtes d'utilisateurs.

3. Système selon la revendication 1 ou 2, dans lequel ledit dispositif d'affichage (41) sert à afficher lesdites données de requêtes d'utilisateurs ayant des niveaux de priorité différents en différentes couleurs.

4. Système selon la revendication 1, 2 ou 3, dans lequel:
ledit ordinateur traitant des requêtes (2) comporte un dispositif de réglage de temps de réponse (42), par lequel peut être saisi un intervalle de temps prescrit correspondant audit type d'appareil de formation d'images ou utilisateur pour traiter ladite requête d'utilisateur, et
ledit dispositif d'affichage (41) sert à afficher les donnés de requêtes d'utilisateurs en retard, qui n'ont pas été traitées dans ledit intervalle de temps prescrit établi par ledit dispositif de réglage de temps de réponse (42), d'une manière différente.

5. Système selon la revendication 4, dans lequel ledit dispositif d'affichage (41) fait clignoter lesdites donnés de requêtes d'utilisateurs en retard.

6. Système selon la revendication 4 ou 5, dans lequel ledit dispositif de commande d'affichage (37) sert à donner une première priorité auxdites donnés de requêtes d'utilisateurs en retard puis à agencer une pluralité de données de requêtes d'utilisateurs selon un ordre de priorité prescrit.
